# EUROPEAN PATENT APPLICATION

(11) **EP 4 307 099 A1**
(43) Date of publication of application: **17.01.2024**
(21) Application number: 23179692.1
(22) Date of filing: 16.06.2023
(51) Int. Cl.: G06F 3/12, G06F 11/30

(54) **INFORMATION PROCESSING APPARATUS AND IMAGE FORMING APPARATUS**

(30) Priority: 14.07.2022 JP 2022113051
(71) Applicant: Toshiba Tec Kabushiki Kaisha, Shinagawa-ku Tokyo 141-8562 (JP)
(72) Inventor: Fukuhara, Takanori, Tokyo 141-8562 (JP)
(74) Representative: Bandpay & Greuter

(57) **Abstract**

According to one embodiment, an information processing apparatus is capable of communicating with a device. The information processing apparatus includes a storage unit, a communication unit, and a control unit. The storage unit stores information indicating processing for each event in the device. The communication unit receives a packet related to an event in the device from the device. The control unit performs control so as to execute processing specified based on the information indicating the processing for each event in the device and stored in the storage unit and the packet.

## Description

### FIELD

Embodiments described herein relate generally to an information processing apparatus and an image forming apparatus.

### BACKGROUND

In the related art, in general, a user arranges consumables and initiates contact for component replacement for a device such as a thermal printer. In general, maintenance service parts and the like are arranged at a service center or the like after a service contact is received.

However, the device such as the thermal printer does not have the function of executing these arrangements on its own, and thus the user is required to adjust the timing of these arrangements.

### DISCLOSURE OF INVENTION

To this end, there is provided an information processing apparatus according to claim 1. Preferred embodiments of the information processing apparatus are set out in dependent claims 2 to 9. There is also provided a method of controlling an information processing apparatus configured to communicate with a device according to claim 10. Preferred embodiments of the method are set out in the dependent claims 11 to 15.

### DESCRIPTION OF THE DRAWINGS

FIG. 1 is a block diagram illustrating an outline of a configuration example of a communication system according to at least one embodiment;
FIG. 2 is a block diagram illustrating an outline of a configuration example of a thermal printer;
FIG. 3 is a diagram exemplifying data structure of event data stored in the thermal printer;
FIG. 4 is a block diagram illustrating an outline of a configuration example of an image forming apparatus;
FIG. 5 is a diagram exemplifying data structure of proxy processing data stored in the image forming apparatus;
FIG. 6 is a flowchart illustrating an example of processing related to component replacement by the thermal printer;
FIG. 7 is a flowchart illustrating an example of proxy processing related to component replacement by the image forming apparatus;
FIG. 8 is a flowchart illustrating an example of processing related to consumables arrangement by the thermal printer;
FIG. 9 is a flowchart illustrating an example of proxy processing related to consumables arrangement by the image forming apparatus;
FIG. 10 is a flowchart illustrating an example of error-related processing by the thermal printer;
FIG. 11 is a flowchart illustrating an example of error-related proxy processing by the image forming apparatus;
FIG. 12 is a flowchart illustrating another example of the error-related proxy processing by the image forming apparatus; and
FIG. 13 is a diagram illustrating a manual display example in the image forming apparatus.

### DETAILED DESCRIPTION

At least one embodiment can provide a technique capable of processing that cannot be executed by another device in place of the other device.

In general, according to at least one embodiment, an information processing apparatus is an apparatus capable of communicating with a device. The information processing apparatus includes a storage unit (storage), a communication unit (communicator), and a control unit (controller). The storage unit stores information indicating processing for each event in the device. The communication unit receives a packet related to an event in the device from the device. The control unit performs control so as to execute processing specified based on the information indicating the processing for each event in the device and stored in the storage unit and the packet.

### (Configuration Example)

Hereinafter, at least one embodiment will be described with reference to the drawings.

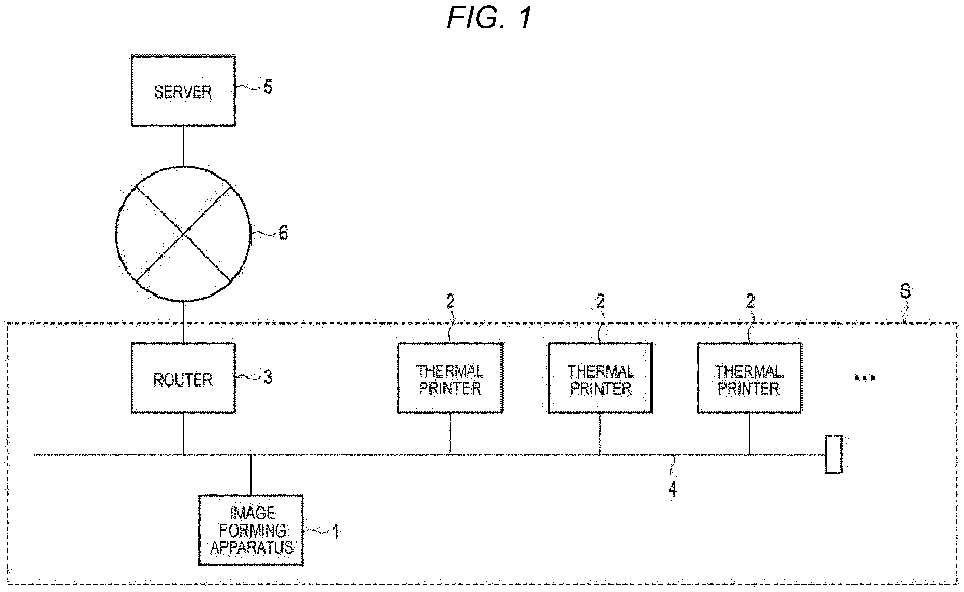

FIG. 1 is a block diagram exemplifying a communication system S.

The communication system S includes an image forming apparatus 1, a plurality of thermal printers 2, and a router 3. The image forming apparatus 1, the plurality of thermal printers 2, and the router 3 are interconnected via a network 4 so as to be communicable with each other. For example, the network 4 is a local area network (LAN) or the like. The LAN may be a wireless LAN or a wired LAN. Although the plurality of thermal printers 2 are exemplified in FIG. 1, the communication system S may include a single thermal printer 2. The communication system S may also refer to a system that includes at least two electronic devices. The communication system S is an example of an information processing system.

The image forming apparatus 1 is an electronic device provided with an electrophotographic printing function. The image forming apparatus 1 will be described as a multifunction peripheral (MFP) provided with a copy function, a print function, a facsimile function, a scanner function, and the like. The image forming apparatus 1 is capable of communicating with the thermal printers 2. The image forming apparatus 1 performs processing that cannot be executed by the thermal printers 2 in place of the thermal printers 2. The image forming apparatus 1 is an example of an information processing apparatus. A configuration example of the image forming apparatus 1 will be described later.

The thermal printer 2 is an electronic device provided with the function of printing by heat generation. The thermal printer 2 does not have the function of communicating with a server 5 via a network 6. The thermal printer 2 is an example of a device. The thermal printer 2 is an example of another device that is viewed from the image forming apparatus 1 in relation to the image forming apparatus 1. A configuration example of the thermal printer 2 will be described later.

The router 3 relays data communication between the network 4 and the network 6. For example, the network 6 is the Internet. The image forming apparatus 1 is capable of communicating with the server 5 via the network 6. The server 5 is an electronic device that has an information processing function. The server 5 executes processing for maintenance of the thermal printer 2, such as component replacement and consumables arrangement for the thermal printer 2.

A configuration example of the thermal printer 2 will be described.

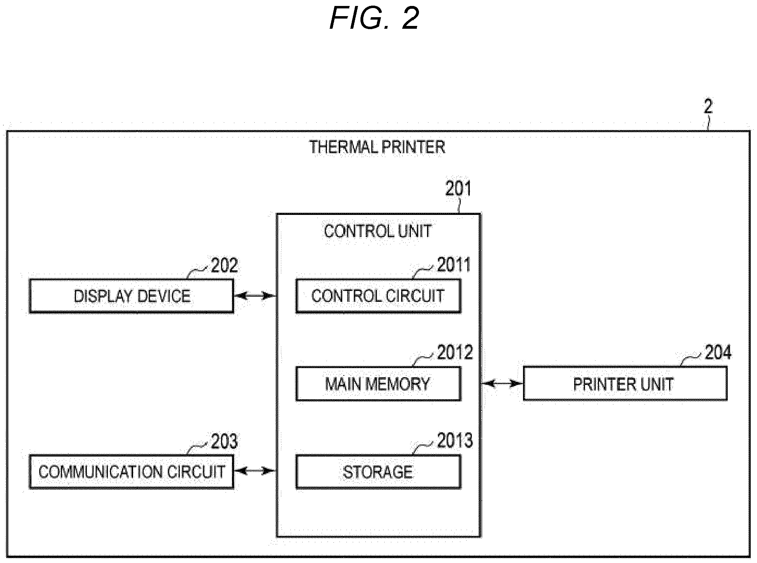

FIG. 2 is a block diagram illustrating an outline of the configuration example of the thermal printer 2.

The thermal printer 2 includes a control unit 201, a display device (display) 202, a communication circuit 203 (communicator), and a printer unit 204.

The control unit 201 controls the operation of each unit of the thermal printer 2. The control unit 201 includes a control circuit 2011, a main memory 2012, and a storage 2013.

The control circuit 2011 corresponds to the central part of the thermal printer 2. The control circuit 2011 is an element that configures a computer of the thermal printer 2. The control circuit 2011 includes a processor such as a central processing unit (CPU). The control circuit 2011 may include an application specific integrated circuit (ASIC), a field programmable gate array (FPGA), a graphics processing unit (GPU), or the like in addition to or instead of the CPU. The control circuit 2011 loads a program pre-stored in the main memory 2012 or the storage 2013 into the main memory 2012. The control circuit 2011 executes various processes by executing the program loaded into the main memory 2012. The program is a program for causing the control circuit 2011 to execute various processes. The control circuit 2011 is an example of the control unit of the thermal printer 2.

The main memory 2012 corresponds to the main storage part of the thermal printer 2. The main memory 2012 is an element that configures the computer of the thermal printer 2. The main memory 2012 includes a non-volatile memory area and a volatile memory area. The main memory 2012 stores an operating system or a program in the non-volatile memory area. The main memory 2012 uses the volatile memory area as a work area where data is appropriately rewritten by the control circuit 2011. For example, the main memory 2012 includes a read only memory (ROM) as the non-volatile memory area. For example, the main memory 2012 includes a random access memory (RAM) as the volatile memory area.

The storage 2013 corresponds to the auxiliary storage part of the thermal printer 2. The storage 2013 is an element that configures the computer of the image forming apparatus 1. For example, the storage 2013 may be a flash memory or the like. The storage 2013 is an example of the storage unit of the thermal printer 2.

The storage 2013 stores event data. The event data is data including information indicating each event. For example, the event data is data including event identification information and event-indicating information for each event in the thermal printer 2. The events are events that occur in the thermal printer 2. The events include component replacement in the thermal printer 2. For example, although the component may be a thermal head, a platen roller, or the like, the components may be various components included in the thermal printer 2 and are not limited thereto. The events include consumables arrangement for the thermal printer 2. For example, although the consumables may be an ink ribbon, paper, or the like, the consumables may be various consumables used in the thermal printer 2 and are not limited thereto. The events include an error in the thermal printer 2. The error is a state unsuitable for printing by the thermal printer 2. For example, although the error may be a temporary structural error or the like, the error may be a temporary software error. It should be noted that the events are not limited thereto and may be various events that can be detected in the thermal printer 2.

The event identification information is associated with the event-indicating information for each event. The event identification information is information that enables unique event identification. A packet related to an event is an event-associated packet or an event-indicating packet. Based on event occurrence detection, the thermal printer 2 transmits the packet related to an event of which occurrence is detected to the image forming apparatus 1 via the network 4. The packet related to an event includes event-associated event identification information. The packet related to an event is a packet for causing the image forming apparatus 1 to execute processing with respect to an event. Therefore, the packet related to an event is also a packet related to processing that can be executed by the image forming apparatus 1. In the following description, the packet related to an event will also be referred to as an event-related proxy packet. The proxy packet is a dedicated packet. The proxy packet is also called a token. The proxy packet may be encrypted from the viewpoint of security or the like. A configuration example of the event data will be described later.

The display device 202 is a device capable of displaying images. Although the display device 202 is a liquid crystal display, an organic electroluminescence (EL) display, or the like, the display device 202 is not limited thereto. The display device 202 is an example of the display unit of the thermal printer 2.

The communication circuit 203 is an interface for communicably connecting the thermal printer 2 to the image forming apparatus 1 via the network 4. The communication circuit 203 is an example of the communication unit of the thermal printer 2.

The printer unit 204 is a unit that prints an image on paper by generating heat. For example, the printer unit 204 includes a thermal head, a platen roller, and the like. The thermal head may print on paper by dissolving ink contained in an ink ribbon with heat generated by each heating element that configures the thermal head. If the paper is thermal paper, the thermal head may print on the paper with heat generated by each heating element that configures the thermal head without using an ink ribbon. Paper is sandwiched between the platen roller and the thermal head.

The event data stored in the thermal printer 2 will be described.

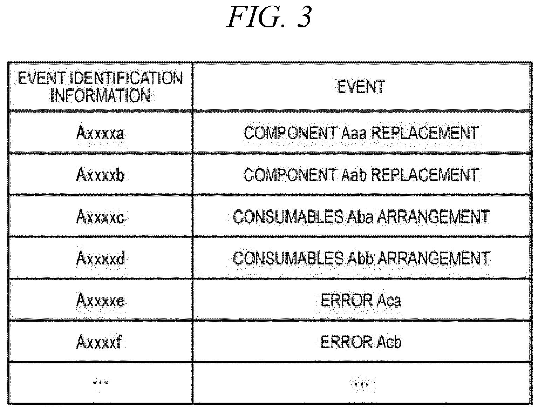

FIG. 3 is a diagram exemplifying data structure of the event data stored in the thermal printer 2.

The event data is data including event identification information and event-indicating information for each event. If the event is component replacement in the thermal printer 2, the event may be associated with different event identification information for each component type. If the event is consumables arrangement for the thermal printer 2, the event may be associated with different event identification information for each type of consumables. If the event is an error in the thermal printer 2, the event may be associated with different event identification information for each error type.

A configuration example of the image forming apparatus 1 will be described.

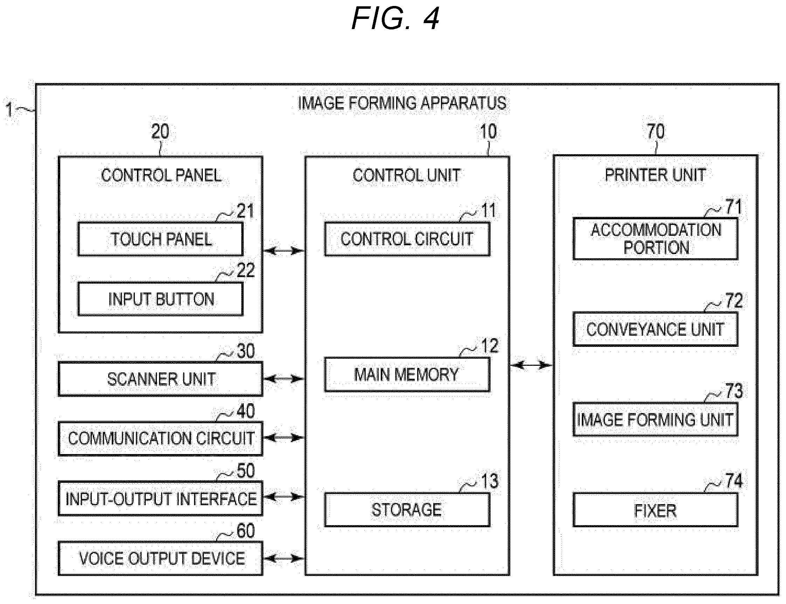

FIG. 4 is a block diagram illustrating an outline of the configuration example of the image forming apparatus 1 according to the embodiment.

The image forming apparatus 1 includes a control unit (controller) 10, a control panel 20, a scanner unit 30, a communication circuit (communicator) 40, an input-output interface 50, a voice output device 60, and a printer unit (printer) 70.

The control unit 10 controls the operation of each unit of the image forming apparatus 1. The control unit 10 includes a control circuit 11, a main memory 12, and a storage 13.

The control circuit 11 corresponds to the central part of the image forming apparatus 1. The control circuit 11 is an element that configures the computer of the image forming apparatus 1. The control circuit 11 may have the same hardware configuration as the control circuit 2011. The control circuit 11 loads a program pre-stored in the main memory 12 or the storage 13 into the main memory 12. The control circuit 11 executes various processes by executing the program loaded into the main memory 12. The program is a program for causing the control circuit 11 to execute various processes. The control circuit 11 is an example of the control unit of the image forming apparatus 1.

The main memory 12 corresponds to the main storage part of the image forming apparatus 1. The main memory 12 is an element that configures the computer of the image forming apparatus 1. The main memory 12 includes a non-volatile memory area and a volatile memory area. The main memory 12 stores an operating system or a program in the non-volatile memory area. The main memory 12 uses the volatile memory area as a work area where data is appropriately rewritten by the control circuit 11. For example, the main memory 12 includes a read only memory (ROM) as the non-volatile memory area. For example, the main memory 12 includes a random access memory (RAM) as the volatile memory area.

The storage 13 corresponds to the auxiliary storage part of the image forming apparatus 1. The storage 13 is an element that configures the computer of the image forming apparatus 1. For example, the storage 13 includes a hard disk drive (HDD). The storage 13 may include a semiconductor storage medium such as a solid state drive (SSD) in addition to or instead of the HDD. The storage 13 stores the program described above, data used by the control circuit 11 to perform various processes, and data generated by the control circuit 11 performing processing. The storage 13 is an example of the storage unit of the image forming apparatus 1.

The storage 13 stores proxy processing data. The proxy processing data is data including information indicating processing for each event in the thermal printer 2 for each thermal printer 2. The processing regarding an event is processing in which the image forming apparatus 1 executes processing that cannot be executed by the thermal printer 2 in place of the thermal printer 2. In the following description, the processing regarding an event will also be referred to as proxy processing regarding an event. For example, the proxy processing data is data including event identification information and information indicating proxy processing regarding an event for each proxy processing regarding an event with regard to each thermal printer 2. If the event is component replacement, the proxy processing regarding the event is component replacement-related processing. For example, the proxy processing regarding the event is a contact (e.g., a request) for component replacement. If the event is consumables arrangement, the proxy processing regarding the event is consumables arrangement-related processing. For example, the proxy processing regarding the event is a contact for consumables arrangement. If the event is an error, the proxy processing regarding the event is error-related processing. For example, the proxy processing regarding the event may be display of an error-related manual on a touch panel 21. The manual includes material such as a procedure manual. The proxy processing regarding the event may be printing of the error-related manual by the printer unit 70. It should be noted that the proxy processing regarding an event is not limited thereto and can be appropriately set depending on the event. The event identification information is associated with information indicating the proxy processing regarding an event for each proxy processing. A configuration example of the proxy processing data will be described later.

The control panel 20 includes the touch panel 21 and an input button 22.

The touch panel 21 is a device where images can be displayed and instructions based on user operations on the touch panel 21 can be input. The touch panel 21 includes a display device capable of displaying images. Although the display device is a liquid crystal display, an organic electroluminescence (EL) display, or the like, the display device is not limited thereto. The touch panel 21 includes an input device laminated on the display device to enable the input of the instructions based on the user operations on the touch panel 21. The user operations on the touch panel 21 are user operations entailing contact with the touch panel 21. The touch panel 21 is also called a touch panel. The touch panel 21 is an example of the display unit of the image forming apparatus 1.

The input button 22 is a pushable button such as a printing start button. The input button 22 is an interface where an instruction can be input based on a user operation on the input button 22.

The scanner unit 30 is a device that reads an image such as a character, a figure, and a photograph drawn on a sheet placed at a predetermined position. The scanner unit 30 includes a line sensor. The line sensor may be of charge coupled device (CCD) type. The line sensor may be of contact image sensor (CIS) type. The scanner unit 30 generates image data based on the image read using the line sensor. The scanner unit 30 transmits the generated image data to the control unit 10. The control unit 10 saves the received image data in the storage 13 or transmits the data to the printer unit 70.

The communication circuit 40 is an interface for communicably connecting the image forming apparatus 1 and a user terminal via a wired or wireless network. Although the user terminal is, for example, a personal computer (PC) or the like, the user terminal is not limited thereto. The communication circuit 40 is an example of the communication unit of the image forming apparatus 1.

The input-output interface 50 is an interface for connecting the image forming apparatus 1 and an external device. The input-output interface 50 includes a wired cable connector. For example, although the external device is a voice output device or the like, the external device is not limited thereto.

The voice output device 60 is a device capable of outputting a voice under the control of the control circuit 11. For example, the voice output device 60 is a speaker.

The printer unit 70 is a unit that prints an image on a sheet. The printer unit 70 uses a print function to form an image on a sheet based on image data transmitted from the user terminal via the network. The printer unit 70 uses a copy function to form an image on a sheet based on image data generated by the scanner unit 30. Here, an example of the printer unit 70 that uses a tandem-type toner image transfer unit will be described. The printer unit 70 includes an accommodation portion 71, a conveyance unit 72, an image forming unit 73, and a fixer 74.

The accommodation portion 71 accommodates sheets. The accommodation portion 71 includes a paper feed cassette and a pickup roller. The paper feed cassette accommodates sheets. The pickup roller picks up the sheets one by one from the paper feed cassette. The pickup roller supplies the picked sheet to the conveyance unit 72.

The conveyance unit 72 conveys the sheets in the printer unit 70. The conveyance unit 72 includes a plurality of rollers and a registration roller. The plurality of rollers include a roller that conveys the sheet supplied by the pickup roller to the registration roller. The plurality of rollers include a roller that is provided downstream of the fixer 74 to be described later and discharges the sheet to a paper discharge tray. In accordance with the timing at which the transfer unit of the image forming unit 73 to be described later transfers a toner image onto a sheet, the registration roller conveys the sheet to the transfer unit.

The image forming unit 73 forms a toner image on a sheet. The image forming unit 73 includes an intermediate transfer belt, a plurality of developing portions, an exposer, the transfer unit, and so on. The intermediate transfer belt is an endless belt. The plurality of developing portions correspond to the number of toner types. The plurality of developing portions include black, cyan, magenta, and yellow developing portions. Each developing portion includes a photoreceptor drum. Each developing portion includes a charger, a developing device, a primary transfer roller, a cleaning unit, and a static eliminator around the photoreceptor drum. The photoreceptor drum is a drum with a surface that has a photoreceptor layer. The charger uniformly charges the photoreceptor layer on the surface of the photoreceptor drum. The developing device develops an electrostatic latent image on the surface of the photoreceptor drum with toner. The developing device forms a toner image on the surface of the photoreceptor drum. The primary transfer roller faces the photoreceptor drum and sandwiches the intermediate transfer belt. The primary transfer roller transfers the toner image on the surface of the photoreceptor drum onto the intermediate transfer belt. The cleaning unit removes untransferred toner from the surface of the photoreceptor drum. The static eliminator irradiates the surface of the photoreceptor drum with light. The static eliminator removes electricity from the photoreceptor layer of the photoreceptor drum by the light irradiation. The exposer irradiates the surface of the photoreceptor drum of each developing portion with laser light via an optical system such as a polygon mirror. The exposer forms an electrostatic pattern as an electrostatic latent image on the surface of the photoreceptor drum. The transfer unit transfers the charged toner image on the surface of the intermediate transfer belt to a sheet. The transfer unit includes a secondary transfer roller and a support roller configured to sandwich the intermediate transfer belt and the sheet from both sides in the thickness direction.

The fixer 74 applies heat and pressure to the sheet supplied from the image forming unit 73 with the toner image formed. The fixer 74 fixes the toner image formed on the sheet to the sheet with the heat and pressure.

It should be noted that the hardware configuration of the image forming apparatus 1 is not limited to the configuration described above. In the image forming apparatus 1, the above components can be omitted and changed and new components can be added as appropriate. The image forming apparatus 1 may not have the voice output device 60. The voice output device 60 may be connected to the image forming apparatus 1 via the input-output interface 50.

The proxy processing data stored in the image forming apparatus 1 will be described.

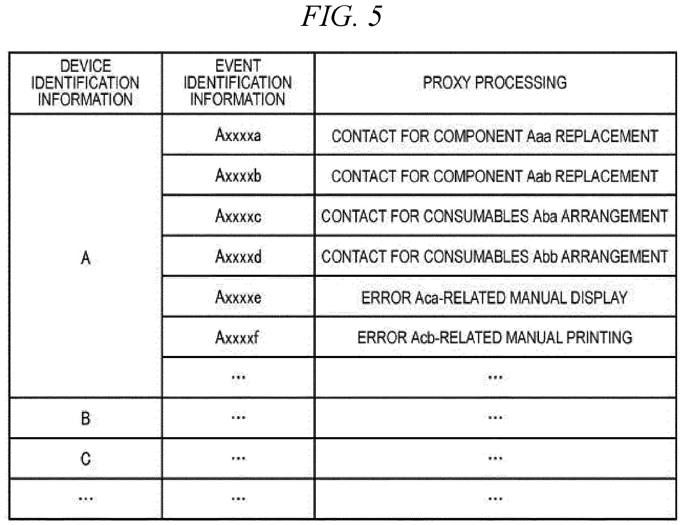

FIG. 5 is a diagram exemplifying data structure of the proxy processing data stored in the image forming apparatus 1.

For example, the proxy processing data is data including event identification information and information indicating proxy processing regarding an event for each proxy processing regarding an event with regard to each thermal printer 2. The event identification information and information indicating proxy processing regarding an event with regard to each thermal printer 2 are associated with device identification information of each thermal printer 2. The device identification information is information that enables unique identification of the thermal printer 2. If the event is an error in the thermal printer 2, the proxy processing may be different or the same for each error type.

### (Operation Example)

Next, processing by the control circuit 11 of the image forming apparatus 1 and the control circuit 2011 of the thermal printer 2 configured as described above will be described.

It should be noted that the processing procedure described below is merely an example and each process may be changed as much as possible. In addition, as for the processing procedure described below, steps can be omitted, replaced, and added as appropriate depending on the embodiment.

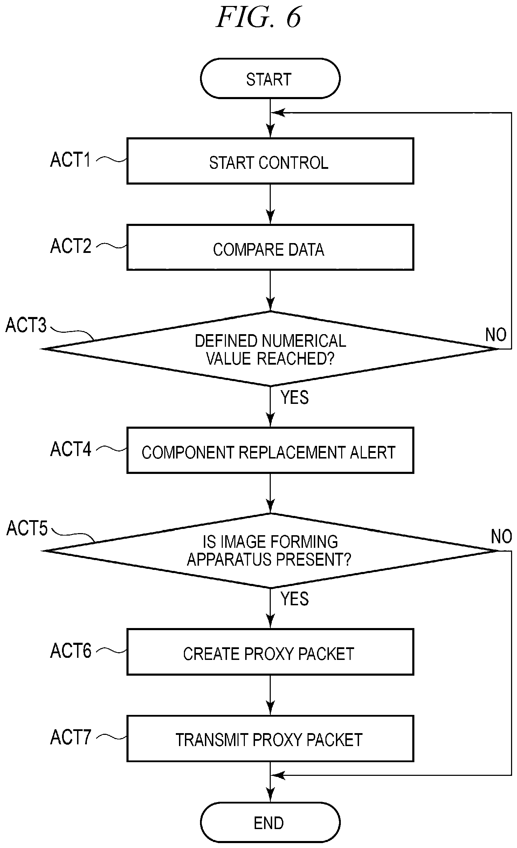

FIG. 6 is a flowchart illustrating an example of processing related to component replacement by the thermal printer 2.

Although replacing any component will be described as an example here, the same applies to replacing various components included in the thermal printer 2.

The control circuit 2011 starts control by a maintenance component replacement timing algorithm (ACT1). The maintenance component replacement timing algorithm is an algorithm for detecting the occurrence of component replacement in the thermal printer 2. The storage 2013 stores information indicating a component replacement timing used in the maintenance component replacement timing algorithm. The component replacement timing is a pre-component failure timing. The information indicating a component replacement timing may be defined numerical value information serving as a threshold for a component operation-related value. The component operation-related value may be operating time. The information indicating a component replacement timing can be set in any manner.

The control circuit 2011 compares the component operation-related value with the defined numerical value (ACT2).

The control circuit 2011 determines whether the component operation-related value reached the defined numerical value (ACT3). If the component operation-related value did not reach the defined numerical value (ACTS, NO), the processing shifts from ACT3 to ACT1. If the component operation-related value reached the defined numerical value (ACTS, YES), the control circuit 2011 detects the occurrence of component replacement. The processing shifts from ACT3 to ACT4.

The control circuit 2011 controls the display device 202 to display a component replacement alert (ACT4). The component replacement alert is an alert indicating that it is time to replace a component.

The control circuit 2011 determines the presence or absence of the image forming apparatus 1 to which an event-related proxy packet is to be transmitted (ACT5). In ACT5, for example, the control circuit 2011 determines whether the image forming apparatus 1 that is capable of executing proxy processing regarding an event is connected to the thermal printer 2 via the network 4.

The processing shifts from ACT5 to ACT6 in the presence of the image forming apparatus 1 to which the event-related proxy packet is to be transmitted (ACT5, YES). The processing ends in the absence of the image forming apparatus 1 to which the event-related proxy packet is to be transmitted (ACT5, NO).

The control circuit 2011 creates an event-related proxy packet based on the component replacement occurrence detection (ACT6). In ACT6, for example, the control circuit 2011 acquires event identification information associated with the occurrence-detected component replacement based on event data. The control circuit 2011 creates an event-related proxy packet including the acquired event identification information. In this example, the event-related proxy packet is a packet related to the occurrence-detected component replacement.

The control circuit 2011 transmits the event-related proxy packet (ACT7). In ACT7, for example, the control circuit 2011 performs control such that the event-related proxy packet is transmitted to the image forming apparatus 1 using the communication circuit 203. The communication circuit 203 transmits the event-related proxy packet to the image forming apparatus 1 via the network 4.

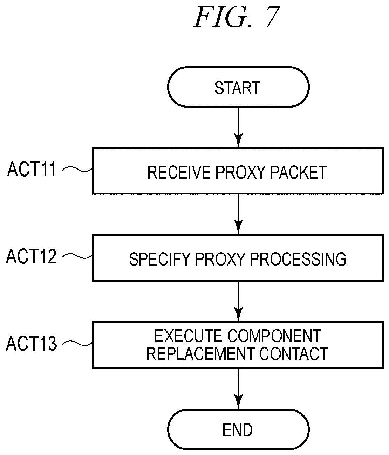

FIG. 7 is a flowchart illustrating an example of component replacement-related proxy processing by the image forming apparatus 1.

The control circuit 11 performs control such that a proxy packet related to an event in the thermal printer 2 is received from the thermal printer 2 using the communication circuit 40 (ACT11). In ACT11, for example, the control circuit 11 performs control such that a proxy packet related to component replacement in the thermal printer 2 is received from the thermal printer 2 using the communication circuit 40. The communication circuit 40 receives, via the network 4, the proxy packet related to the component replacement in the thermal printer 2 as the proxy packet related to the event in the thermal printer 2. In this example, the event-related proxy packet is a packet for causing the image forming apparatus 1 to execute component replacement contact. Therefore, the event-related proxy packet is also a packet related to component replacement contact that can be executed by the image forming apparatus 1.

The control circuit 11 specifies proxy processing regarding an event based on the proxy processing data and the event-related proxy packet (ACT12). In ACT12, for example, the control circuit 11 specifies, based on the proxy processing data, proxy processing regarding the event associated with the event identification information indicated by the event-related proxy packet. In this example, the control circuit 11 specifies component replacement contact as the proxy processing regarding the event.

The control circuit 11 performs control such that the component replacement contact specified based on the proxy processing data and the event-related proxy packet is executed via the network 6 using the communication circuit 40 (ACT13). The execution of the component replacement contact is an example of executing proxy processing regarding an event specified based on the proxy processing data and the event-related proxy packet. For example, the communication circuit 40 transmits component replacement contact to the server 5 via the network 6. The component replacement contact may include component-specifying information. The component replacement contact may include component replacement arrangement information.

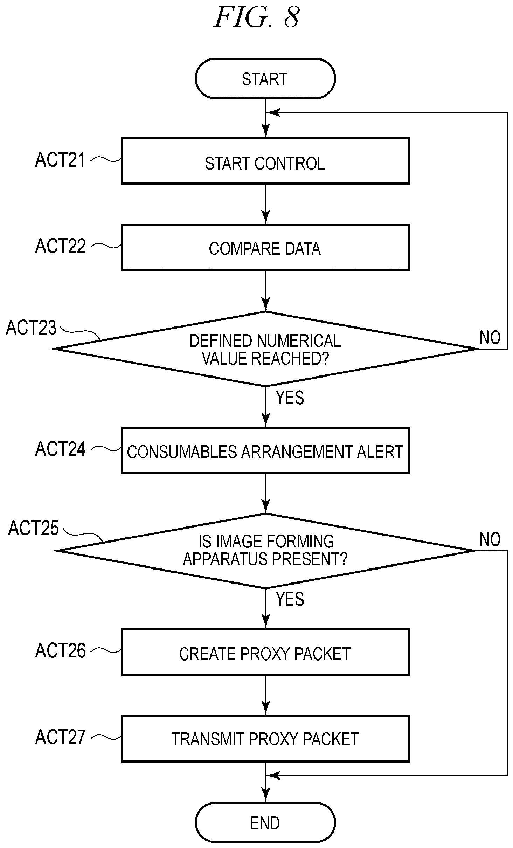

FIG. 8 is a flowchart illustrating an example of processing related to consumables arrangement by the thermal printer 2.

Although arranging any consumables will be described as an example here, the same applies to arranging various consumables included in the thermal printer 2.

The control circuit 2011 starts control by a consumables arrangement timing algorithm (ACT21). The consumables arrangement timing algorithm is an algorithm for detecting the occurrence of consumables arrangement in the thermal printer 2. The storage 2013 stores information indicating a consumables arrangement timing used in the consumables arrangement timing algorithm. The consumables arrangement timing is a timing before remaining consumables run out. The consumables arrangement timing-indicating information may be defined numerical value information serving as a threshold for the usage of consumables. The consumables arrangement timing-indicating information can be set in any manner.

The control circuit 2011 compares the usage of consumables with the defined numerical value (ACT22).

The control circuit 2011 determines whether the usage of consumables reached the defined numerical value (ACT23). If the usage of consumables did not reach the defined numerical value (ACT23, NO), the processing shifts from ACT23 to ACT21. If the usage of consumables reached the defined numerical value (ACT23, YES), the control circuit 2011 detects the occurrence of consumables arrangement. The processing shifts from ACT23 to ACT24.

The control circuit 2011 controls the display device 202 to display a consumables arrangement alert (ACT24). The consumables arrangement alert is an alert indicating that it is time to arrange consumables.

The control circuit 2011 determines the presence or absence of the image forming apparatus 1 to which an event-related proxy packet is to be transmitted (ACT25). In ACT25, for example, the control circuit 2011 determines whether the image forming apparatus 1 that is capable of executing proxy processing regarding an event is connected to the thermal printer 2 via the network 4.

The processing shifts from ACT25 to ACT26 in the presence of the image forming apparatus 1 to which the event-related proxy packet is to be transmitted (ACT25, YES). The processing ends in the absence of the image forming apparatus 1 to which the event-related proxy packet is to be transmitted (ACT25, NO).

The control circuit 2011 creates an event-related proxy packet based on the consumables arrangement occurrence detection (ACT26). In ACT26, for example, the control circuit 2011 acquires event identification information associated with the occurrence-detected consumables arrangement based on event data. The control circuit 2011 creates an event-related proxy packet including the acquired event identification information. In this example, the event-related proxy packet is a packet related to the occurrence-detected consumables arrangement.

The control circuit 2011 transmits the event-related proxy packet (ACT27). In ACT27, for example, the control circuit 2011 performs control such that the event-related proxy packet is transmitted to the image forming apparatus 1 using the communication circuit 203. The communication circuit 203 transmits the event-related proxy packet to the image forming apparatus 1 via the network 4.

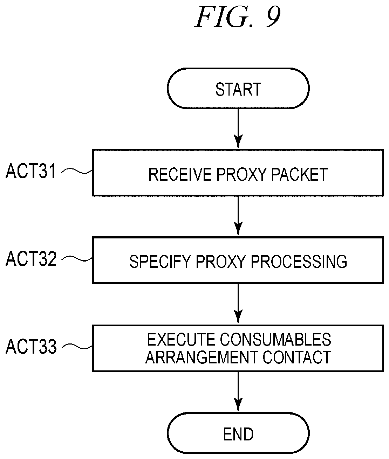

FIG. 9 is a flowchart illustrating an example of consumables arrangement-related proxy processing by the image forming apparatus 1.

The control circuit 11 performs control such that a proxy packet related to an event in the thermal printer 2 is received from the thermal printer 2 using the communication circuit 40 (ACT31). In ACT31, for example, the control circuit 11 performs control such that a proxy packet related to consumables arrangement in the thermal printer 2 is received from the thermal printer 2 using the communication circuit 40. The communication circuit 40 receives, via the network 4, the proxy packet related to the consumables arrangement in the thermal printer 2 as the proxy packet related to the event in the thermal printer 2. In this example, the event-related proxy packet is a packet for causing the image forming apparatus 1 to execute consumables arrangement contact. Therefore, the event-related proxy packet is also a packet related to consumables arrangement contact that can be executed by the image forming apparatus 1.

The control circuit 11 specifies proxy processing regarding an event based on the proxy processing data and the event-related proxy packet (ACT32). In ACT32, for example, the control circuit 11 specifies, based on the proxy processing data, proxy processing regarding the event associated with the event identification information indicated by the event-related proxy packet. In this example, the control circuit 11 specifies consumables arrangement contact as the proxy processing regarding the event.

The control circuit 11 performs control such that the consumables arrangement contact specified based on the proxy processing data and the event-related proxy packet is executed via the network 6 using the communication circuit 40 (ACT33). The execution of the consumables arrangement contact is an example of executing proxy processing regarding an event specified based on the proxy processing data and the event-related proxy packet. For example, the communication circuit 40 transmits consumables arrangement contact to the server 5 via the network 6. The consumables arrangement contact may include consumables-specifying information. The consumables arrangement contact may include consumables arrangement information.

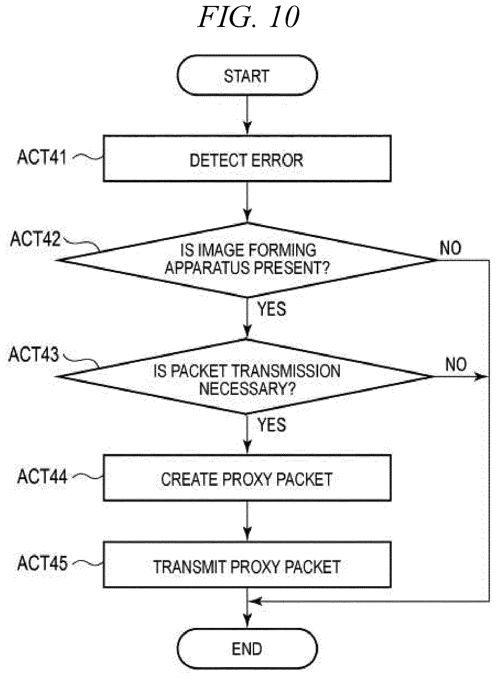

FIG. 10 is a flowchart illustrating an example of error-related processing by the thermal printer 2.

Although any error will be described as an example here, the same applies to various errors that can be detected in the thermal printer 2.

The control circuit 2011 detects the occurrence of an error (ACT41). The occurrence of the error may be detected with a known technique.

The control circuit 2011 determines the presence or absence of the image forming apparatus 1 to which an event-related proxy packet is to be transmitted (ACT42). In ACT42, for example, the control circuit 2011 determines whether the image forming apparatus 1 that is capable of executing proxy processing regarding an event is connected to the thermal printer 2 via the network 4.

The processing shifts from ACT42 to ACT43 in the presence of the image forming apparatus 1 to which the event-related proxy packet is to be transmitted (ACT42, YES). The processing ends in the absence of the image forming apparatus 1 to which the event-related proxy packet is to be transmitted (ACT42, NO).

The control circuit 2011 determines whether an event-related proxy packet needs to be transmitted based on the error occurrence detection (ACT43). Whether the event-related proxy packet needs to be transmitted may be set for each error type.

The processing shifts from ACT43 to ACT44 if the event-related proxy packet needs to be transmitted (ACT43, YES). The processing ends if the event-related proxy packet does not have to be transmitted (ACT43, NO).

The control circuit 2011 creates an event-related proxy packet based on the error occurrence detection (ACT44). In ACT44, for example, the control circuit 2011 acquires event identification information associated with the occurrence-detected error based on event data. The control circuit 2011 creates an event-related proxy packet including the acquired event identification information. In this example, the event-related proxy packet is a packet related to the occurrence-detected error.

The control circuit 2011 transmits the event-related proxy packet (ACT45). In ACT45, for example, the control circuit 2011 performs control such that the event-related proxy packet is transmitted to the image forming apparatus 1 using the communication circuit 203. The communication circuit 203 transmits the event-related proxy packet to the image forming apparatus 1 via the network 4.

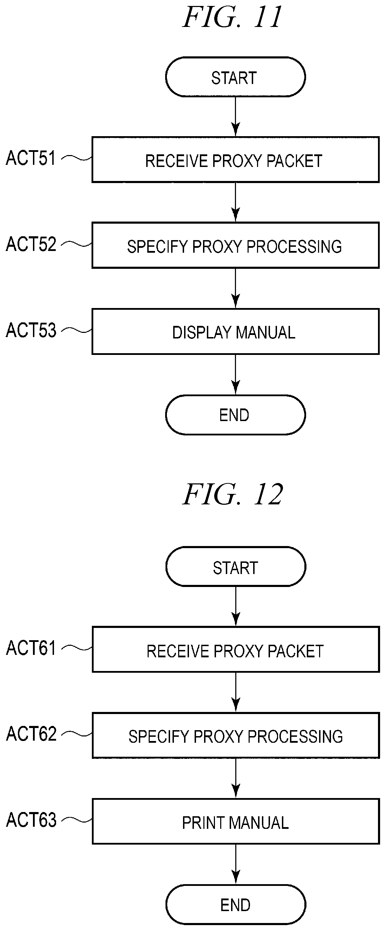

FIG. 11 is a flowchart illustrating an example of error-related proxy processing by the image forming apparatus 1.

The control circuit 11 performs control such that a proxy packet related to an event in the thermal printer 2 is received from the thermal printer 2 using the communication circuit 40 (ACT51). In ACT51, for example, the control circuit 11 performs control such that a proxy packet related to an error in the thermal printer 2 is received from the thermal printer 2 using the communication circuit 40. The communication circuit 40 receives, via the network 4, the proxy packet related to the error in the thermal printer 2 as the proxy packet related to the event in the thermal printer 2. In this example, the event-related proxy packet is a packet for causing the image forming apparatus 1 to execute manual display. Therefore, the event-related proxy packet is also a packet related to manual display that can be executed by the image forming apparatus 1.

The control circuit 11 specifies proxy processing regarding an event based on the proxy processing data and the event-related proxy packet (ACT52). In ACT52, for example, the control circuit 11 specifies, based on the proxy processing data, proxy processing regarding the event associated with the event identification information indicated by the event-related proxy packet. In this example, the control circuit 11 specifies error-related manual display on the touch panel 21 as the proxy processing regarding the event.

The control circuit 11 performs control such that the error-related manual display on the touch panel 21 specified based on the proxy processing data and the event-related proxy packet is executed (ACT53). In ACT53, for example, the control circuit 11 controls the touch panel 21 to display an error-related part of a manual.

FIG. 12 is a flowchart illustrating another example of the error-related proxy processing by the image forming apparatus 1.

The control circuit 11 performs control such that a proxy packet related to an event in the thermal printer 2 is received from the thermal printer 2 using the communication circuit 40 (ACT61). In ACT61, for example, the control circuit 11 performs control such that a proxy packet related to an error in the thermal printer 2 is received from the thermal printer 2 using the communication circuit 40. The communication circuit 40 receives, via the network 4, the proxy packet related to the error in the thermal printer 2 as the proxy packet related to the event in the thermal printer 2. In this example, the event-related proxy packet is a packet for causing the image forming apparatus 1 to execute manual printing. Therefore, the event-related proxy packet is also a packet related to manual printing that can be executed by the image forming apparatus 1.

The control circuit 11 specifies proxy processing regarding an event based on the proxy processing data and the event-related proxy packet (ACT62). In ACT62, for example, the control circuit 11 specifies, based on the proxy processing data, proxy processing regarding the event associated with the event identification information indicated by the event-related proxy packet. In this example, the control circuit 11 specifies error-related manual printing by the printer unit 70 as the proxy processing regarding the event.

The control circuit 11 performs control such that the error-related manual printing by the printer unit 70 specified based on the proxy processing data and the event-related proxy packet is executed (ACT63). In ACT63, for example, the control circuit 11 controls the printer unit 70 to print an error-related part of a manual.

### (Display Example)

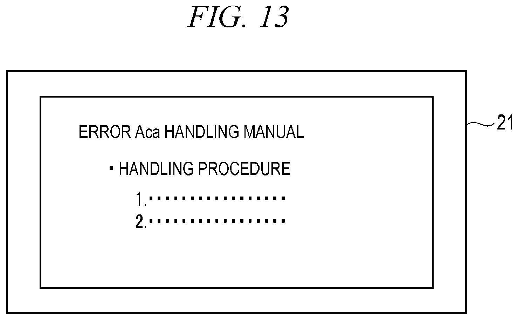

FIG. 13 is a diagram illustrating a manual display example in the image forming apparatus 1.

The touch panel 21 displays an error-related manual. For example, the touch panel 21 displays an error-related part of the manual.

### (Effect)

The information processing apparatus according to at least one embodiment is an apparatus capable of communicating with another device. The information processing apparatus includes a storage unit that stores information indicating processing for each event in the other device. The information processing apparatus includes a communication unit that receives a packet related to an event in the other device from the other device. The information processing apparatus includes a control unit that performs control so as to execute processing specified based on the information indicating the processing for each event in the other device and stored in the storage unit and the packet.

As a result, the information processing apparatus is capable of performing processing regarding an event that cannot be executed by the other device in place of the other device without the other device being equipped with an expensive or special system. A user need not handle an event that occurred in the other device, and thus user convenience is improved.

In the information processing apparatus according to at least one embodiment, the packet is a packet related to component replacement in another device. The control unit performs control so as to execute component replacement contact via a network.

As a result, the information processing apparatus is capable of processing component replacement contact in place of the other device. A user need not perform component replacement contact, and thus user convenience is improved.

In the information processing apparatus according to at least one embodiment, the packet is a packet related to consumables arrangement in another device. The control unit performs control so as to execute consumables arrangement contact via a network.

As a result, the information processing apparatus is capable of processing consumables arrangement contact in place of the other device. A user need not perform consumables arrangement contact, and thus user convenience is improved.

In the information processing apparatus according to at least one embodiment, the packet is a packet related to an error in another device. The control unit performs control so as to execute error-related manual display on a display unit.

As a result, the information processing apparatus is capable of processing error-related manual display in place of the other device. A user can browse a manual without having to perform the operation of error-related manual display, and thus user convenience is improved.

The information processing apparatus according to at least one embodiment further includes a printer unit. The packet is a packet related to an error in another device. The control unit performs control so as to execute error-related manual printing by the printer unit.

As a result, the information processing apparatus is capable of processing error-related manual printing in place of the other device. A user can see a printed manual without having to perform the operation of error-related manual printing, and thus user convenience is improved.

### (Other Embodiments)

Although the image forming apparatus 1 in the embodiment described above as an example transmits component replacement contact or consumables arrangement contact via the network 6 such as the Internet, the apparatus is not limited thereto. The image forming apparatus 1 may transmit component replacement contact or consumables arrangement contact via a communication network such as FAX and IP-FAX.

If the event is an error in the embodiment described above as an example, the control circuit 11 performs control so as to execute error-related manual display or error-related manual printing as proxy processing regarding the event. However, the circuit is not limited thereto. The control circuit 11 may control error notification as proxy processing regarding an event. The error notification may be alert sound output from a speaker of the image forming apparatus 1. The error notification may be transmission of a notification by email or the like via the network 4 to a user terminal. The control circuit 11 may control error-related manual notification as proxy processing regarding an event. The error-related manual notification is, for example, transmission of a manual attached to an email or the like via the network 4 to a user terminal. The manual may be an error-related part. The control circuit 11 may perform control so as to execute the error notification along with the error-related manual display or the error-related manual printing.

Although an example in which an event-related proxy packet includes event identification information was described in the example described above, the packet is not limited thereto. The event-related proxy packet may be any packet insofar as processing regarding an event can be specified by the image forming apparatus 1 receiving the event-related proxy packet.

Although the image forming apparatus 1 was described as an example of the information processing apparatus in the embodiment described above, the apparatus is not limited thereto. The information processing apparatus may be a terminal such as a personal computer (PC).

In at least one embodiment described above, the thermal printer 2 was described as an example of a target device for causing the image forming apparatus 1 to execute proxy processing. However, the device is not limited thereto. Various electronic devices capable of communicating with at least the image forming apparatus 1 can be target devices for causing the image forming apparatus 1 to execute proxy processing.

The program may be transferred in a state of being stored in the electronic device according to at least one embodiment or may be transferred without being stored in the electronic device. In the latter case, the program may be transferred via a network or may be transferred in a state of being recorded on a recording medium. The recording medium is a non-transitory tangible medium. The recording medium is a computer-readable medium. The form of the recording medium is not limited insofar as the recording medium is a program-storable and computer-readable medium such as a CD-ROM and a memory card.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims are intended to cover such forms or modifications as would fall within the scope of the disclosure.

## Claims

1. An information processing apparatus configured to communicate with a device and comprising:
a storage (13) configured to store information indicating processing for each event in the device;
a communicator (40) configured to receive from the device a packet related to an event in the device; and
a controller (10) configured to perform control so as to execute processing specified based on the information indicating the processing for each event in the device and stored in the storage and the packet.

2. The apparatus according to claim 1, wherein
the packet is a packet related to component replacement in the device, and
the controller is configured to perform control so as to execute contact for the component replacement via a network.

3. The apparatus according to claim 1 or 2, wherein
the packet is a packet related to consumables arrangement for the device, and
the controller is configured to perform control so as to execute contact for the consumables arrangement via a network.

4. The apparatus according to any one of claims 1 to 3, wherein
the packet is a packet related to an error in the device, and
the controller is configured to perform control such that a display displays a manual related to the error.

5. The apparatus according to any one of claims 1 to 4, further comprising a printer, wherein
the packet is a packet related to an error in the device, and
the controller is configured to perform control such that the printer prints a manual related to the error.

6. The apparatus according to any one of claims 1 to 5, wherein the apparatus is an image forming apparatus.

7. The apparatus according to claim 6, wherein the image forming apparatus is a multifunction peripheral.

8. The apparatus according to any one of claims 1 to 7, wherein the device includes a thermal printer (2).

9. The apparatus according to claim 3, wherein the controller is configured to control a display to display a consumables arrangement alert.

10. A method of controlling an information processing apparatus configured to communicate with a device, the method comprising:
storing information indicating processing for each event in the device in a storage;
receiving from the device a packet related to an event in the device; and
performing control so as to execute processing specified based on the information indicating the processing for each event in the device and stored in the storage and the packet.

11. The method according to claim 10, wherein
the packet is a packet related to component replacement in the device, the method further comprising performing control so as to execute contact for the component replacement via a network.

12. The method according to claim 10 or 11, wherein
the packet is a packet related to consumables arrangement for the device, the method further comprising performing control so as to execute contact for the consumables arrangement via a network.

13. The method according to any one of claims 10 to 12, wherein
the packet is a packet related to an error in the device, the method further comprising performing control such that a display displays a manual or portion thereof related to the error.

14. The method according to any one of claims 10 to 13, wherein
the packet is a packet related to an error in the device, the method further comprising performing control such that a printer prints a manual or portion thereof related to the error.

15. The method according to any one of claims 10 to 14, wherein the device includes a thermal printer.
